# EUROPÄISCHE PATENTSCHRIFT

(11) **EP 3 116 738 B1**
(45) Veröffentlichungstag und Bekanntmachung des Hinweises auf die Patenterteilung: **16.05.2018**
(21) Anmeldenummer: 15711045.3
(22) Anmeldetag: 11.03.2015
(51) Int. Cl.: B60K 37/06

(54) **ANZEIGEEINRICHTUNG FÜR EINEN INNENRAUM EINES KRAFTFAHRZEUGS UND VERFAHREN ZUM BETREIBEN EINER SOLCHEN**
DISPLAY DEVICE FOR AN INTERIOR OF A MOTOR VEHICLE, AND METHOD FOR OPERATING THE LIKE
DISPOSITIF D'AFFICHAGE DESTINÉ À UN HABITACLE D'UN VÉHICULE AUTOMOBILE ET PROCÉDÉ SERVANT À FAIRE FONCTIONNER UN DISPOSITIF D'AFFICHAGE DE CE TYPE

(30) Priorität: 14.03.2014 DE 102014003633
(43) Veröffentlichungstag der Anmeldung: 18.01.2017
(73) Patentinhaber: Audi AG, 85045 Ingolstadt (DE)
(72) Erfinder: MÜLLER, Ulrich, 85055 Ingolstadt (DE); KÜHNE, Marcus, 92331 Beilngries (DE)
(86) Internationale Anmeldenummer: PCT/EP2015/000538
(87) Internationale Veröffentlichungsnummer: WO 2015/135649

(56) Entgegenhaltungen:
- DE-A1-102012 007 836
- US-A1- 2008 129 684

## Beschreibung

Die Erfindung betrifft eine Anzeigevorrichtung für einen Innenraum eines Kraftfahrzeugs gemäß dem Oberbegriff von Patentanspruch 1. Sie betrifft ferner ein Verfahren zum Betreiben einer solchen Anzeigevorrichtung gemäß dem Oberbegriff von Patentanspruch 9.

Den Nutzern moderner Kraftfahrzeuge wird eine Vielzahl von Informationen dargeboten. Dies erfolgt teilweise über das Kombiinstrument des Kraftfahrzeugs oder auch über ein Mitteldisplay, das oft ein Teil eines Infotainmentsystems des Kraftfahrzeugs ist. Auch zusätzliche Anzeigen, welche aus dem Kraftfahrzeug entfernt werden können, sind verbreitet. Das Kombiinstrument und das Mitteldisplay werden dabei im Allgemeinen nach einem Abstellen der Zündung des entsprechenden Kraftfahrzeugs oder bei einem Abziehen eines Zündschlüssels abgeschaltet. Dieses Abschalten erfolgt gegebenenfalls auch mit einer zeitlichen Verzögerung.

So beschreibt die DE 10 2007 033 217 A1 ein Infotainmentgerät für ein Kraftfahrzeug mit einer eigenen Stromversorgung. Dabei kann eine Zeitdauer eingestellt werden, bei der das Infotainmentgerät eingeschaltet bleibt, obwohl ein Zündschloss ausgeschaltet wurde.

Die DE 10 2012 007 836 A1 beschreibt einen Kraftwagen bei welchem überwacht wird, ob eine Person in dem Kraftwagen anwesend ist. Dabei wird eine Antriebseinrichtung abgeschaltet, falls erkannt wird, dass die Person den Kraftwagen verlässt oder verlassen hat. Andere Verbraucher, insbesondere Komfortverbraucher, können hier weiterhin mit Energie versorgt werden.

Die US 2008/0129684 A1 offenbart ein Anzeigesystem zum Steuern einer Mehrfachansichts-Anzeige in einem Fahrzeug. Das Anzeigesystem umfasst eine Anzeige zum Erzeugen eines ersten Bildes, das in einem Fahrerbetrachtungsfenster betrachtbar ist, und eines Beifahrerbildes, das in einem Beifahrerbetrachtungsfenster betrachtbar ist. Eine Steuereinheit deaktiviert die Darstellung zumindest einen Teil des Bildinhalts in dem Beifahrerbetrachtungsfenster, wenn bestimmt wird, dass der Fahrer versucht, das Beifahrerbild zu betrachten.

Es ist Aufgabe der vorliegenden Erfindung, eine Anzeigeeinrichtung bereitzustellen, bei der eine Information insbesondere bei einem stehenden Kraftfahrzeug komfortabel angezeigt wird.

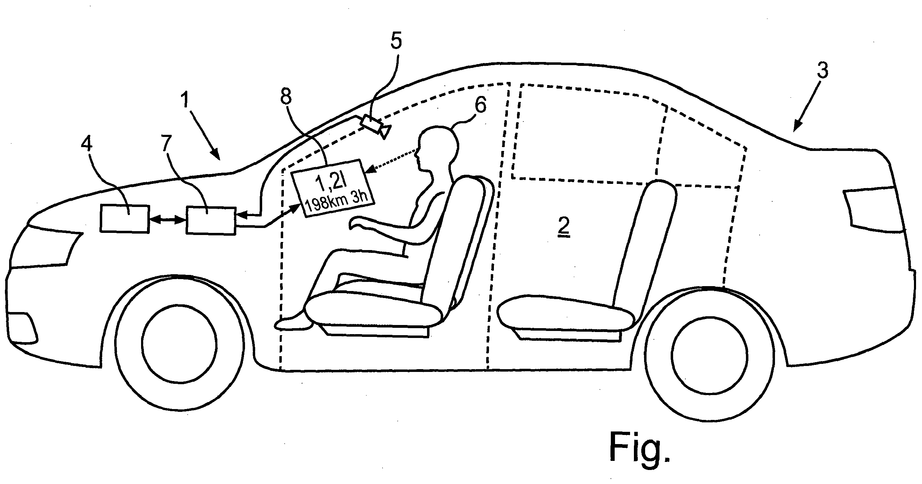

Dies Aufgabe wird durch den Gegenstand der unabhängigen Patentansprüche gelöst. Vorteilhafte Ausführungsformen ergeben sich aus den abhängigen Patentansprüchen, der Beschreibung und der Figur.

Die Erfindung betrifft eine Anzeigeeinrichtung für einen Innenraum eines Kraftfahrzeugs mit einem Bordcomputer, mit einer Erfassungseinheit, die ausgelegt ist, die Anwesenheit zumindest eines Insassen in dem Kraftfahrzeug zu erfassen, mit einer Steuereinheit, welche mit der Erfassungseinheit gekoppelt ist und die ausgelegt ist, Daten der Erfassungseinheit sowie fahrzeug- und umgebungsbezogene Daten aus dem Bordcomputer, welche geeignet sind, ein vergangenes Fahrverhalten zu charakterisieren und/oder ein künftiges Fahrverhalten zu beeinflussen, abzurufen und mit einer Anzeigeeinheit, welche durch die Steuereinheit steuerbar ist und die ausgelegt ist, die von der Steuereinheit abgerufenen fahrzeug- und umgebungsbezogenen Daten anzuzeigen. Unter einem Bordcomputer wird hier insbesondere ein Bordcomputer mit einer Navigationseinheit verstanden. Bei den fahrzeug- und umgebungsbezogenen Daten handelt es sich insbesondere um Daten, welche geeignet sind, einen gegenwärtigen und/oder vergangenen Zustand des Kraftfahrzeugs zu charakterisieren. Dabei kann eine Umgebungsinformation mitberücksichtigt sein. Es handelt sich also um Parameter, die dem Bordcomputer vorliegen und welche eine Bedeutsamkeit für den Fahrer haben oder zumindest nach den dem Bordcomputer vorliegenden Daten und allgemeinen, möglicherweise auch fahrerspezifischen, Anforderungen im Straßenverkehr eine Bedeutsamkeit haben könnten. Mit anderen Worten handelt es sich also um kundenrelevante Fahrzeug- und Umgebungsdaten im Gegensatz zu Daten, wie sie z.B. für eine Werkstatt von Interesse sind.

Um eine besonders komfortable Anzeige bereitzustellen, ist die Steuereinheit ausgelegt, die Anzeigeeinheit derart zu steuern, dass diese die fahrzeug- und umgebungsbezogenen Daten zumindest teilweise anzeigt, bis durch die Erfassungseinheit erfasst ist, dass zumindest kein Fahrer mehr in dem Kraftfahrzeug ist. Es kann hier auch vorgesehen sein, dass die fahrzeug- und umgebungsbezogenen Daten zumindest teilweise angezeigt werden, bis durch die Erfassungseinheit erfasst ist, dass zumindest kein Fahrer und/oder Beifahrer mehr in dem Kraftfahrzeug ist, oder bis erfasst ist, dass kein Insasse mehr in dem Kraftfahrzeug ist. Das hat den Vorteil, dass die Daten nur dann angezeigt werden, wenn sie auch benötigt werden, d.h. wenn ein Betrachter überhaupt vorhanden ist. Zudem ist so eine Anzeige der Daten möglich, wenn beispielsweise der Fahrer mit dem Zündschlüssel das Kraftfahrzeug verlassen hat, ohne dass hier eine vorbestimmte, unflexible zeitliche Restriktion greift. Es ist somit ausgeschlossen, dass die Anzeige der Daten zur Unzeit, also wenn noch ein Insasse diese betrachtet, erlöscht, was einen gesteigerten Ablesekomfort zur Folge hat.

In einer bevorzugten Ausführungsform ist vorgesehen, dass die Steuereinheit ausgelegt ist, das Anzeigen der fahrzeug- und umgebungsbezogenen Daten durch die Anzeigeeinheit auch zu beenden, wenn ein vorbestimmtes Abbruchkriterium erfüllt ist, insbesondere wenn ein Abbruchkriterium erfüllt ist, welches eine Handlung eines Insassen erfordert. Es kann sich hier insbesondere um ein Abschalten der Anzeigeeinheit über einen entsprechen Schalter handeln. Das hat den Vorteil, dass die Anzeige der Daten abgebrochen werden kann, so diese als störend empfunden wird.

In einer anderen Ausführungsform ist vorgesehen, dass die Erfassungseinheit einen berührungslosen Sensor umfasst, insbesondere einen Infrarotsensor und/oder eine Kamera und/oder eine time-of-flight Kamera. Das hat den Vorteil, dass ein Insasse unabhängig von einer Kraft, also insbesondere unabhängig von einem Gewicht des Insassen, zuverlässig und genau erfasst werden kann. Die Verwendung einer Kamera oder einer time-of-flight Kamera ermöglicht hier überdies auch ein Erkennen von spezifischen Insassen, was eine Individualisierung der gezeigten Daten ermöglicht.

In einer besonders vorteilhaften Ausführungsform ist vorgesehen, dass die Anzeigeeinheit ein Kombiinstrument, insbesondere ein frei programmierbares Kombiinstrument, ist. Es kann dabei auch um eine mechanisch von dem Kraftfahrzeug entkoppelbare Anzeigeeinheit handeln, beispielsweise ein aufgestecktes Display eines Kombiinstruments, welches bei einem Verlassen des Kraftfahrzeugs mitgenommen werden kann. Das hat den Vorteil, dass gerade der Fahrer besonders komfortabel die angezeigten Daten betrachten kann. Dem Fahrer wird auch ein Hin- und Herblicken zwischen verschiedenen Anzeigeeinrichtungen erspart, da die für ihn relevanten fahrzeug- und umgebungsbezogenen Daten direkt auf der für ihn optimierten Anzeigeeinheit dargestellt ist. Außerdem kann somit gegebenenfalls ein weiteres Display, beispielsweise ein Mitteldisplay, eingespart werden und somit Kosten reduziert werden.

Es kann auch vorgesehen sein, dass die Steuereinheit ausgelegt ist, die Anzeigeeinheit derart zu steuern, dass die anzuzeigenden fahrzeug- und umgebungsbezogenen Daten zumindest teilweise erst angezeigt werden, nachdem ein Antriebsmotor des Kraftfahrzeugs abgestellt wurde und/oder ein für den Betrieb des Kraftfahrzeugs erforderliches Authentifizierungsmittel, insbesondere ein Zündschlüssel, aus einer vorgesehenen Position im Kraftfahrzeug entfernt oder deaktiviert wurde und/oder nachdem eine Ende einer Fahrt des Kraftfahrzeugs anhand vorbestimmter Kriterien von der Steuereinheit bekannt wurde. Ein Ende einer Fahrt eines Kraftfahrzeugs kann hier beispielsweise durch ein Ausschalten einer Zündung, das Erkennen eines Einparkvorgangs, einem längeren Stehen, einem Öffnen eines Laderaums und/oder eines Haltens an einem Ort, an welchem das Kraftfahrzeug in der Vergangenheit bereits öfters geparkt wurde, erkannt werden. Das hat den Vorteil, dass der Fahrer nicht durch eine Anzeige von Daten, welche gegebenenfalls erst nach Ende einer Fahrt von Interesse sind, während der Fahrt abgelenkt wird. Dies hat sowohl eine gesteigerte Sicherheit als auch einen gesteigerten Komfort zur Folge.

In einer anderen Ausführungsform ist vorgesehen, dass die Steuereinheit ausgelegt ist, die Anzeigeeinheit in zwei unterschiedlichen Betriebsmodi zu steuern. Zum einen ist dies ein Standbetriebsmodus, in dem die Anzeigeeinheit betrieben wird, wenn ein Antriebsmotor abgestellt wurde und/oder ein für den Betrieb des Kraftfahrzeugs erforderliches Authentifizierungsmittel aus einer vorgesehenen Position im Kraftfahrzeug entfernt oder deaktiviert wurde und/oder nachdem ein Ende einer Fahrt des Kraftfahrzeugs anhand vorgegebener Kriterien von der Steuereinheit erkannt wurde. Zum anderen wird die Anzeigeeinheit in einem Fahrbetriebsmodus betrieben, wenn die Kriterien für den Standbetriebsmodus nicht erfüllt sind. Dabei unterscheidet sich die Darstellung der jeweils anzuzeigenden Daten in der Auswahl der Daten und/oder in der Farbe und/oder in der Größe und/oder in der Helligkeit und/oder in der Position auf der Anzeigeeinheit in den beiden Betriebsmodi. Es findet also ein Umschalten der Anzeigeeinheit statt, wodurch mehr Information auf der Anzeigeeinheit dargestellt werden kann, da jeweils nur ein relevanter Ausschnitt der insgesamt verfügbaren, insbesondere fahrzeug- und umgebungsbezogenen, Daten gezeigt wird. Auch können so in Stand- bzw. Fahrbetriebsmodus nicht nur jeweils unterschiedliche Daten angezeigt werden, sondern auch die gleichen Daten in einer unterschiedlichen Darstellung mit unterschiedlicher Wichtung. Beispielsweise kann also in dem Fahrbetrieb eine große Fläche der Anzeigeeinheit darauf aufgewendet werden, eine Geschwindigkeit anzuzeigen und beispielsweise nur ein kleiner Ausschnitt der Anzeigeeinheit für die Anzeige eines Durchschnittsverbrauchs. Im Standbetriebsmodus kann dann beispielsweise die große Fläche für die Anzeige des Durchschnittsverbrauchs verwendet werden, und beispielsweise die kleine Fläche für eine weitere Information, welche zum Beispiel im Fahrbetriebsmodus gar nicht angezeigt wird. Das hat auch den Vorteil, dass bestimmte Daten in dem Standbetriebsmodus komfortabel automatisch angezeigt werden können, welche sonst erst durch einen Fahrer oder einen andren Benutzer ausgewählt werden müssten.

In einer weiteren vorteilhaften Ausführungsform ist vorgesehen, dass die fahrzeug- und umgebungsbezogenen Daten Daten einer letzten Fahrt und/oder Fahrzeugzustandsdaten umfassen, insbesondere zumindest ein Element aus einer Gruppe mit den Elementen: Fahrtstrecke in einer Kartendarstellung, Zeitdauer in einer Fahrt, gefahrene Kilometer, Verbrauchswert, insbesondere Verbrauchswert einer elektrischen Energie oder eines Treibstoffs, Durchschnittsgeschwindigkeit, Füllstand einer Batterie, Füllstand eines Tanks, nächster Ladezeitpunkt für eine Batterie, sowie Lade- oder Tankempfehlung, insbesondere eine Lade- oder Tankempfehlung auf Grund einer prognostizierten nächsten Fahrt, Ort der nächstgelegenen Lade- oder Tankstelle, Hinweis auf einen Fahrzeugdefekt oder eine erforderliche Wartungsarbeit. Die prognostizierte nächste Fahrt kann hier insbesondere eine Rückfahrt zum Ausgangspunkt der letzten Fahrt beinhalten. Das hat den Vorteil, dass der verbliebene Insassen des Kraftfahrzeuges auf einen Blick die relevanten Daten der letzten Fährt bzw. aktuelle Zustandsdaten des Kraftfahrzeugs erfassen kann. Er kann so gegebenenfalls auch das Fahrverhalten der nächsten Fahrt planen, insbesondere ein Einbeziehen der nächstgelegenen Lade- oder Tankstelle in eine Fahrtplanung.

Hierbei kann vorgesehen sein, dass die fahrzeug- und umgebungsbezogenen Daten Vergleichswerte mit Fahrzeugzustandsdaten und/oder Zeitdauern, die von vorhergehenden Fahrten stammen, umfassen. Das hat den Vorteil, dass so Tendenzen oder Entwicklungen erfasst werden können und insbesondere z.B. ein Einfluss eines Fahrstils auf einen Energie- und/oder Kraftstoffverbrauch oder eine Zeitdauer einer Fahrt komfortabel dargestellt werden kann.

Die Erfindung betrifft auch ein Verfahren zum Betreiben einer Anzeigevorrichtung für einen Innenraum eines Kraftfahrzeugs mit einem Bordcomputer, mit einer Erfassungseinheit, die ausgelegt ist, die Anwesenheit zumindest eines Insassen in dem Kraftfahrzeug zu erfassen, einer Steuereinheit, welche mit der Erfassungseinheit gekoppelt ist und die ausgelegt ist, Daten der Erfassungseinheit sowie fahrzeug- und umgebungsbezogene Daten aus dem Bordcomputer, welche geeignet sind, ein vergangenes Fahrverhalten zu charakterisieren und/oder ein künftiges Fahrverhalten zu beeinflussen, abzurufen, und mit einer Anzeigeeinheit, welche durch die Steuereinheit steuerbar ist und die ausgelegt ist, die von der Steuereinheit abgerufenen fahrzeugbezogenen Daten anzuzeigen. Das Verfahren umfasst dabei zunächst ein Erfassen von Insassen in dem Kraftfahrzeug durch die Erfassungseinheit. Um den Komfort zu steigern, findet ein Anzeigen der fahrzeugbezogenen Daten aus dem Bordcomputer durch die Anzeigeeinheit zumindest teilweise statt, solange bis zumindest kein Fahrer mehr in dem Kraftfahrzeug durch die Erfassungseinheit erfasst wird. Analog zu dem Vorrichtungsanspruch ergeben sich hier oben genannte Vorteile.

Es kann hier vorgesehen sein, dass die anzuzeigenden fahrzeug- und umgebungsbezogenen Daten zumindest teilweise erst angezeigt werden, nachdem ein Antriebsmotor des Kraftfahrzeugs abgestellt wurde und/oder ein für den Betrieb des Kraftfahrzeugs erforderliches Authentifizierungsmittel aus einer vorgesehenen Position im Kraftfahrzeug entfernt oder deaktiviert wurde und/oder nachdem ein Ende einer Fahrt des Kraftfahrzeugs anhand vorgegebener Kriterien von der Steuereinheit erkannt wurde.

Weitere Merkmale der Erfindung ergeben sich aus den Ansprüchen, der Figur und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügte Zeichnung näher erläutert. Dabei zeigt die einzige Fig. schematisch ein Kraftfahrzeug mit einer erfindungsgemäßen Anzeigeeinrichtung.

Die einzige Fig. zeigt hier in einer schematischen Seitenansicht ein Kraftfahrzeug 3 mit einer Anzeigeeinrichtung 1. Die Anzeigeeinrichtung 1 umfasst hier eine Erfassungseinheit 5, welche beispielhaft als Stereokamera ausgeführt ist, eine Steuereinheit 7, welche Daten über eine Anwesenheit zumindest eines Insassen in einem Innenraum 2 des Kraftfahrzeugs 3 von der Erfassungseinheit 5 erhält und gleichzeitig fahrzeugbezogene Daten von einem Bordcomputer 4 anfordern kann. Die Steuereinheit 7 steuert hier eine Anzeigeeinheit 8, über welche Daten, beispielsweise auch in einer grafisch aufbereiteten Form, an Insassen 6 des Kraftwagens 3, insbesondere an einen Fahrer und/oder Beifahrer ausgegeben werden können. Im vorliegenden Beispiel ist nun eine Situation gezeigt, bei der der einzige Insasse 6 des Kraftfahrzeugs 3 der Beifahrer ist, welcher sich über die Anzeigeeinheit 8 über die letzte Fahrt informiert.

In dem gezeigten Beispiel ist also ein Fahrer des Kraftfahrzeugs 3 bereits ausgestiegen und hat in diesem Beispiel Zündung und Motor ausgeschaltet, sowie den Zündschlüssel mit sich genommen. Die Anzeigeeinrichtung 1 erkennt hier also, dass die Fahrt beendet ist und zeigt nun auf der Anzeigeeinheit 8, welche ein Display eines Kombiinstrumentes ist, nicht mehr während einer Fahrt relevante Daten wie beispielsweise Geschwindigkeit, Drehzahl, Wassertemperatur und Blinkeraktivität an. Stattdessen werden nun in diesem Beispiel Daten angezeigt, welche rückblickend für die Fahrt von Bedeutung sind oder wichtig für die Planung der folgenden Fahrt. Es kann hier beispielsweise auch eine Fahrtstrecke in einer Kartendarstellung illustriert werden. Im vorliegende Beispiel zeigt die Anzeigeeinheit 8 drei Daten an, nämlich einmal einen Durchschnittsverbrauch von 1,2 Litern, eine Strecke von 198 Kilometern, sowie eine Zeitdauer von drei Stunden. Die größte Fläche nimmt hier die Durchschnittsverbrauchsanzeige ein, da diese im gezeigten Beispiel von besonders großem Interesse ist. Ein Großteil der Anzeigefläche könnte aber auch von anderen Daten oder Informationen belegt werden, beispielsweise von einem grafischen Überblick der letzten Fahrt in einer Kartendarstellung. Die anderen Daten sind hier relativ klein am unteren Rand der Anzeigeeinheit 8 angezeigt. Als das Kraftfahrzeug 3 noch in Bewegung war, wurde an der Stelle des Durchschnittsverbrauchs beispielsweise noch eine Geschwindigkeits- und/oder Drehzahlanzeige gezeigt. Der Durchschnittsverbrauch war beispielsweise zwar angegeben aber möglicherweise nur als nebengeordnete Information, z.B. am unteren Rand der Anzeigeeinheit 8.

Dieses Beispiel illustriert drei grundsätzliche Möglichkeiten, einen Abschiedsscreen nach Ende einer Fahrt zu gestalten. Zum einen können Daten, wie beispielsweise die Länge einer Strecke, welche bereits während der Fahrt im Allgemeinen zumeist angezeigt werden, unverändert weiterhin angezeigt werden. Zum andern können Daten, welche während der Fahrt angezeigt werden, nach der Fahrt entweder beispielsweise vergrößert oder anderweitig hervorgehoben dargestellt werden, wenn diese wichtig sind, oder auch nicht mehr angezeigt werden, wenn die Daten nicht mehr wichtig sind. Schließlich können auch neue Daten, die während des Fahrens nicht angezeigt werden, wie beispielsweise hier die drei Stunden als Fahrtdauer, in der Anzeigeeinheit 8 dargestellt werden. Die in der Anzeigeeinheit 8 dargestellten Daten werden dabei so lange angezeigt, wie durch die Erfassungseinheit 5 ein Fahrer bzw. im vorliegenden Beispiel ein Beifahrer oder ein Fahrer als im Kraftfahrzeug 3 anwesend erfasst wird. Der Insasse 6 kann also im gezeigten Beispiel entspannt und komfortabel eine Zusammenfassung charakterisierender Daten der letzten Fahrt betrachten, ohne dass er hier die Anwesenheit des Fahrers oder eines Zündschlüssel oder dergleichen in irgendeiner Weise benötigen würde. Der Fahrer kann also z.B. mit dem Zündschlüssel, der beispielsweise an einem Schlüsselbund mit anderen Schlüsseln verwahrt ist, anderen Interessen nachgehen. Erst wenn der Insasse 6, also hier der Beifahrer, ebenfalls den Innenraum des Kraftfahrzeugs 3 verlässt, wird dann unabhängig von der Zeit die vergangen ist, seit das Ende der Fahrt erreicht wurde, die Anzeigeeinheit 8 abgeschaltet. Alternativ kann dies auch der Beifahrer selbst erreichen, indem er beispielsweise über einen Knopf die Anzeigeeinheit 8 ausschaltet. Es kann sich bei der Anzeigeeinheit 8 auch um eine Anzeige eines mitnehmbaren Kombidisplays handeln, so dass der Beifahrer dieses dann bei Verlassen des Kraftfahrzeugs 3 mit sich nehmen könnte.

## Patentansprüche

1. Anzeigeeinrichtung (1) für einen Innenraum (2) eines Kraftfahrzeugs (3) mit einem Bordcomputer (4), mit
- einer Erfassungseinheit (5), die ausgelegt ist, die Anwesenheit zumindest eines Insassen (6) in dem Kraftfahrzeug (3) zu erfassen,
- einer Steuereinheit (7), welche mit der Erfassungseinheit (5) gekoppelt ist und die ausgelegt ist, Daten der Erfassungseinheit (5) sowie fahrzeug- und umgebungsbezogene Daten aus dem Bordcomputer (4), welche geeignet sind, ein vergangenes Fahrverhalten zu charakterisieren und/oder ein künftiges Fahrverhalten zu beeinflussen, abzurufen, und
- einer Anzeigeeinheit (8), welche durch die Steuereinheit (7) steuerbar ist und die ausgelegt ist, die von der Steuereinheit (7) abgerufenen fahrzeugbezogenen Daten anzuzeigen,
**dadurch gekennzeichnet, dass**
die Steuereinheit (7) ausgelegt ist, die Anzeigeeinheit (8) derart zu steuern, dass diese die fahrzeug- und umgebungsbezogenen Daten zumindest teilweise anzeigt, bis durch die Erfassungseinheit (5) erfasst ist, dass zumindest kein Fahrer mehr in dem Kraftfahrzeug (3) ist.

2. Anzeigeeinrichtung (1) nach Anspruch 1,
**dadurch gekennzeichnet, dass**
die Steuereinheit (7) ausgelegt ist, das Anzeigen der fahrzeug- und umgebungsbezogenen Daten durch die Anzeigeeinheit (8) auch zu beenden, wenn ein vorbestimmtes Abbruchkriterium erfüllt ist, insbesondere wenn ein Abbruchkriterium erfüllt ist, welches eine Handlung eines Insassen (6) erfordert.

3. Anzeigeeinrichtung (1) nach einem der vorhergehenden Ansprüche,
**dadurch gekennzeichnet, dass**
die Erfassungseinheit (5) einen berührungslosen Sensor umfasst, insbesondere einen Infrarotsensor und/oder eine Kamera und/oder eine time-of-flight-Kamera.

4. Anzeigeeinrichtung (1) nach einem der vorhergehenden Ansprüche,
**dadurch gekennzeichnet, dass**
die Anzeigeeinheit (8) ein Kombiinstrument, insbesondere ein frei programmierbares Kombiinstrument, ist.

5. Anzeigeeinrichtung (1) nach einem der vorhergehenden Ansprüche,
**dadurch gekennzeichnet, dass**
die Steuereinheit (7) ausgelegt ist, die Anzeigeeinheit (8) derart zu steuern, dass die anzuzeigenden fahrzeug- und umgebungsbezogenen Daten zumindest teilweise erst angezeigt werden, nachdem ein Antriebsmotor des Kraftfahrzeugs (3) abgestellt wurde und/oder ein für den Betrieb des Kraftfahrzeugs (3) erforderliches Authentifizierungsmittel aus einer vorgesehenen Position im Kraftfahrzeug (3) entfernt oder deaktiviert wurde und/oder nachdem ein Ende einer Fahrt des Kraftfahrzeugs (3) anhand vorbestimmter Kriterien von der Steuereinheit (7) erkannt wurde.

6. Anzeigeeinrichtung (1) nach einem der vorhergehenden Ansprüche,
**dadurch gekennzeichnet, dass**
die Steuereinheit (7) ausgelegt ist, die Anzeigeeinheit (8) in zwei unterschiedlichen Betriebsmodi zu steuern, und zwar in einem
- Standbetriebsmodus, wenn ein Antriebsmotor des Kraftfahrzeugs (3) abgestellt wurde und/oder ein für den Betrieb des Kraftfahrzeugs (3) erforderliches Authentifizierungsmittel aus einer vorgesehenen Position im Kraftfahrzeug entfernt oder deaktiviert wurde und/oder nachdem ein Ende einer Fahrt des Kraftfahrzeugs (3) anhand vorgegebener Kriterien von der Steuereinheit (7) erkannt wurde, und in einem
- Fahrbetriebsmodus, wenn die Kriterien für den Standbetriebsmodus nicht erfüllt sind,
wobei die Darstellung der anzuzeigenden fahrzeug- und umgebungsbezogenen Daten sich in der Auswahl der Daten und/oder Farbe und/oder Größe und/oder Helligkeit und/oder Position auf der Anzeigeeinheit (8) in den beiden Betriebsmodi unterscheidet.

7. Anzeigeeinrichtung (1) nach einem der vorhergehenden Ansprüche,
**dadurch gekennzeichnet, dass**
die fahrzeug- und umgebungsbezogenen Daten Daten einer letzten Fahrt und/oder Fahrzeugzustandsdaten umfassen, insbesondere zumindest ein Element aus einer Gruppe mit den Elementen
- Fahrtstrecke in einer Kartendarstellung,
- Zeitdauer einer Fahrt,
- gefahrene Kilometer,
- Verbrauchswert,
- Durchschnittsgeschwindigkeit,
- Füllstand einer Batterie,
- Füllstand eines Tanks,
- nächster Ladezeitpunkt für eine Batterie,
- Lade- oder Tankempfehlung, insbesondere eine Lade- oder Tankempfehlung aufgrund einer prognostizierten nächsten Fahrt,
- Ort der nächstliegenden Lade- oder Tankstelle,
- Hinweis auf einen Fahrzeugdefekt oder eine erforderliche Wartungsarbeit.

8. Anzeigeeinrichtung (1) nach Anspruch 7,
**dadurch gekennzeichnet, dass**
die fahrzeug- und umgebungsbezogenen Daten Vergleichswerte mit Fahrzeugzustandsdaten und/oder Verbrauchsdaten und/oder Zeitdauern, die von vorhergehenden Fahrten stammen, umfassen.

9. Verfahren zum Betreiben einer Anzeigeeinrichtung (1) für einen Innenraum (2) eines Kraftfahrzeugs (3) mit einem Bordcomputer (4), mit
- einer Erfassungseinheit (5), die ausgelegt ist, die Anwesenheit zumindest eines Insassen (6) in dem Kraftfahrzeug (3) zu erfassen,
- einer Steuereinheit (7), welche mit der Erfassungseinheit (5) gekoppelt ist und die ausgelegt ist, Daten der Erfassungseinheit (5) sowie fahrzeug- und umgebungsbezogene Daten aus dem Bordcomputer (4), welche geeignet sind, ein vergangenes Fahrverhalten zu charakterisieren und/oder ein künftiges Fahrverhalten zu beeinflussen, abzurufen, und
- einer Anzeigeeinheit (8), welche durch die Steuereinheit (7) steuerbar ist und die ausgelegt ist, die von der Steuereinheit (7) abgerufenen fahrzeugbezogenen Daten anzuzeigen,
mit dem Schritt:
a) Erfassen von Insassen (6) in dem Kraftfahrzeug (3) durch die Erfassungseinheit (5),
**gekennzeichnet durch** den weiteren Schritt:
b) Anzeigen der fahrzeugbezogenen Daten aus dem Bordcomputer (4) durch die Anzeigeeinheit (8) zumindest teilweise, solange bis zumindest kein Fahrer mehr in dem Kraftfahrzeug (3) durch die Erfassungseinheit (5) erfasst wird.

10. Verfahren nach Anspruch 9,
**dadurch gekennzeichnet, dass**
die anzuzeigenden fahrzeug- und umgebungsbezogenen Daten zumindest teilweise erst angezeigt werden, nachdem ein Antriebsmotor des Kraftfahrzeugs (3) abgestellt wurde und/oder ein für den Betrieb des Kraftfahrzeugs (3) erforderliches Authentifizierungsmittel aus einer vorgesehenen Position im Kraftfahrzeug (3) entfernt oder deaktiviert wurde und/oder nachdem ein Ende einer Fahrt des Kraftfahrzeugs (3) anhand vorgegebener Kriterien von der Steuereinheit (7) erkannt wurde.

## Claims

1. Display device (1) for an interior (2) of a motor vehicle (3) with an on-board computer (4), with:
- a detection unit (5), which is configured to detect the presence of at least one occupant (6) in the motor vehicle (3),
- a control unit (7), which is coupled to the detection unit (5) and which is configured to retrieve data from the detection unit (5) and vehicle-related and surroundings-related data from the on-board computer (4), which are suitable for characterising past travel behaviour and/or influencing future travel behaviour, and
- a display unit (8) which can be controlled by the control unit (7) and which is configured to display the vehicle-related data retrieved by the control unit (7),
**characterised in that**
the control unit (7) is configured to control the display unit (8) such that the latter displays vehicle-related and surroundings-related data at least in part until the detection unit (5) senses that a driver is no longer in the motor vehicle (3).

2. Display device (1) according to claim 1,
**characterised in that**
the control unit (7) is configured to end the presentation of vehicle-related and surroundings-related data by the display unit (8), when a predefined termination criterion has been met, in particular when a termination criterion has been met which requires action by an occupant (6).

3. Display device (1) according to any of the preceding claims,
**characterised in that**
the detection unit (5) comprises a contactless sensor, in particular an infrared sensor and/or a camera and a time-of-flight camera.

4. Display device (1) according to any of the preceding claims,
**characterised in that**
the display unit (8) is a combination instrument, in particular a freely programmable combination instrument.

5. Display device (1) according to any of the preceding claims,
**characterised in that**
the control unit (7) is configured to control the display unit (8) such that the vehicle-related and surroundings-related data are displayed, at least in part, only after a drive motor of the motor vehicle (3) has been switched off and/or an authentication device required for operation of the motor vehicle (3) has been removed from a provided position in the motor vehicle (3) or deactivated and/or after an end of a journey by the motor vehicle (3) has been identified by the control unit (7) based on predetermined criteria.

6. Display device (1) according to any of the preceding claims,
**characterised in that**
the control unit (7) is configured to control the display unit (8) in two different operating modes, including:
- a stationary mode of operation, when a drive motor of the motor vehicle (3) has been switched off and/or an authentication device required for the operation of the motor vehicle (3) has been removed from a provided position in the motor vehicle or deactivated, and/or after an end of a journey of the motor vehicle (3) has been identified by the control unit (7) on the basis of prescribed criteria, and
- a travelling mode of operation, when the criteria for the stationary mode of operation have not been met,
wherein the presentation of the vehicle-related and surroundings-related data differs in the selection of data and/or colour and/or size and/or brightness and/or position on the display unit (8) in the two modes of operation.

7. Display device (1) according to any of the preceding claims,
**characterised in that**
the vehicle-related and surroundings-related data comprise data about the last journey and/or vehicle condition data, in particular at least one element from a group with the elements:
- route in a map presentation,
- duration of a journey,
- kilometres travelled,
- consumption value,
- average speed,
- charge level of a battery,
- fill level of a tank,
- next charging time for a battery,
- charging or fuelling recommendation, in particular a charging or fuelling recommendation based on a forecast next journey,
- location of closest charging or filling station,
- indication of a vehicle malfunction or servicing work required.

8. Display device (1) according to claim 7,
**characterised in that**
the vehicle-related and surroundings-related data comprise comparison values with vehicle condition data and/or consumption data and/or time periods derived from previous journeys.

9. Method for operating a display device (1) for an interior (2) of a motor vehicle (3) with an on-board computer (4), with
- a detection unit (5), which is configured to detect the presence of at least one occupant (6) in the motor vehicle (3),
- a control unit (7), which is coupled to the detection unit (5) and which is configured to retrieve data from the detection unit (5) and vehicle-related and surroundings-related data from the on-board computer (4), which are suitable for characterising past travel behaviour and/or influencing future travel behaviour, and
- a display unit (8) which can be controlled by the control unit (7) and which is configured to display the vehicle-related data retrieved by the control unit (7),
with the step:
a) detection of occupants (6) in the motor vehicle (3) by means of the detection unit (5),
**characterised by** the following step:
b) presentation of vehicle-related data from the on-board computer (4) by the display unit (8), at least in part, until the detection unit (5) senses at least that a driver is no longer in the motor vehicle (3).

10. Method according to claim 9,
**characterised in that**
the vehicle-related and surroundings-related data to be displayed are shown at least in part only after a drive motor of the motor vehicle (3) has been switched off, and/or an authentication device required for operation of the motor vehicle (3) has been removed from a provided position in the motor vehicle (3) or deactivated and/or an end of a journey by the motor vehicle (3) has been identified by the control unit (7) based on prescribed criteria.

## Revendications

1. Dispositif d'affichage (1) pour un habitacle (2) d'un véhicule automobile (3) avec un ordinateur de bord (4), avec
- une unité de détection (5) qui est conçue afin de détecter la présence au moins d'un occupant (6) dans le véhicule automobile (3),
- une unité de commande (7) qui est couplée à l'unité de détection (5) et qui est conçue afin d'extraire des données de l'unité de détection (5) ainsi que des données relatives au véhicule et à l'environnement de l'ordinateur de bord (4) qui sont appropriées afin de caractériser un comportement de conduite précédent et/ou d'influencer un comportement de conduite futur, et
- une unité d'affichage (8) qui peut être commandée par l'unité de commande (7) et qui est conçue afin d'afficher les données relatives au véhicule extraites par l'unité de commande (7),
**caractérisé en ce que**
l'unité de commande (7) est conçue afin de commander l'unité d'affichage (8) de telle manière que celle-ci affiche au moins partiellement les données relatives au véhicule et à l'environnement jusqu'à ce qu'il soit détecté par l'unité de détection (5) qu'au moins aucun conducteur ne soit plus dans le véhicule automobile (3).

2. Dispositif d'affichage (1) selon la revendication 1,
**caractérisé en ce que**
l'unité de commande (7) est conçue afin de terminer également l'affichage des données relatives au véhicule et à l'environnement par l'unité d'affichage (8) lorsqu'un critère d'interruption prédéterminé est rempli, en particulier lorsqu'un critère d'interruption est rempli, lequel nécessite une manipulation d'un occupant (6).

3. Dispositif d'affichage (1) selon l'une quelconque des revendications précédentes,
**caractérisé en ce que**
l'unité de détection (5) comporte un capteur sans contact, en particulier un capteur infrarouge et/ou une caméra et/ou une caméra temps de vol.

4. Dispositif d'affichage (1) selon l'une quelconque des revendications précédentes,
**caractérisé en ce que**
l'unité d'affichage (8) est un tableau de bord, en particulier un tableau de bord librement programmable.

5. Dispositif d'affichage (1) selon l'une quelconque des revendications précédentes,
**caractérisé en ce que**
l'unité de commande (7) est conçue afin de commander l'unité d'affichage (8) de telle manière que les données relatives au véhicule et à l'environnement à afficher ne soient affichées au moins partiellement qu'après qu'un moteur d'entraînement du véhicule automobile (3) a été arrêté et/ou un moyen d'authentification nécessaire au fonctionnement du véhicule automobile (3) a été éloigné d'une position prévue dans le véhicule automobile (3) ou désactivé et/ou après qu'une fin d'un trajet du véhicule automobile (3) a été reconnue au moyen de critères prédéterminés par l'unité de commande (7).

6. Dispositif d'affichage (1) selon l'une quelconque des revendications précédentes,
**caractérisé en ce que**
l'unité de commande (7) est conçue afin de commander l'unité d'affichage (8) dans deux modes de fonctionnement différents, et ce dans un
- mode de fonctionnement d'arrêt lorsqu'un moteur d'entraînement du véhicule automobile (3) a été arrêté et/ou un moyen d'authentification nécessaire au fonctionnement du véhicule automobile (3) a été éloigné d'une position prévue dans le véhicule automobile ou désactivé et/ou après qu'une fin d'un trajet du véhicule automobile (3) a été reconnue au moyen de critères prescrits par l'unité de commande (7), et dans un
- mode de fonctionnement de roulement lorsque les critères pour le mode de fonctionnement d'arrêt ne sont pas remplis,
dans lequel la représentation des données relatives au véhicule et à l'environnement à afficher se distingue dans la sélection des données et/ou de la couleur et/ou la grandeur et/ou la luminosité et/ou la position sur l'unité d'affichage (8) dans les deux modes de fonctionnement.

7. Dispositif d'affichage (1) selon l'une quelconque des revendications précédentes,
**caractérisé en ce que**
les données relatives au véhicule et à l'environnement comportent des données d'un dernier trajet et/ou des données d'état de véhicule, en particulier au moins un élément d'un groupe avec les éléments
- itinéraire dans une représentation cartographique,
- durée d'un trajet,
- kilomètres parcourus,
- valeur de consommation,
- vitesse moyenne,
- niveau d'une batterie,
- niveau d'un réservoir,
- moment de charge suivant pour une batterie,
- recommandation de charge ou de ravitaillement, en particulier une recommandation de charge ou de ravitaillement en raison d'un trajet suivant prévu,
- lieu du point de charge ou de la station-service le plus proche,
- indication d'un défaut de véhicule ou d'un travail d'entretien nécessaire.

8. Dispositif d'affichage (1) selon la revendication 7,
**caractérisé en ce que**
les données relatives au véhicule et à l'environnement comportent des valeurs de comparaison avec des données d'état de véhicule et/ou des données de consommation et/ou des durées qui proviennent de trajets précédents.

9. Procédé de fonctionnement d'un dispositif d'affichage (1) pour un habitacle (2) d'un véhicule automobile (3) avec un ordinateur de bord (4), avec
- une unité de détection (5) qui est conçue afin de détecter la présence au moins d'un occupant (6) dans le véhicule automobile (3),
- une unité de commande (7) qui est couplée à l'unité de détection (5) et qui est conçue afin d'extraire des données de l'unité de détection (5) ainsi que des données relatives au véhicule et à l'environnement de l'ordinateur de bord (4) qui sont appropriées afin de caractériser un comportement de conduite précédent et/ou d'influencer un comportement de conduite futur, et
- une unité d'affichage (8) qui peut être commandée par l'unité de commande (7) et qui est conçue afin d'afficher les données relatives au véhicule extraites par l'unité de commande (7),
avec l'étape :
a) la détection d'occupants (6) dans le véhicule automobile (3) par l'unité de détection (5),
**caractérisé par** l'autre étape :
b) l'affichage des données relatives au véhicule à partir de l'ordinateur de bord (4) par l'unité d'affichage (8) au moins partiellement jusqu'à ce qu'au moins aucun conducteur ne soit plus détecté dans le véhicule automobile (3) par l'unité de détection (5).

10. Dispositif d'affichage selon la revendication 9,
**caractérisé en ce que**
les données relatives au véhicule et à l'environnement à afficher ne sont affichées au moins partiellement qu'après qu'un moteur d'entraînement du véhicule automobile (3) a été arrêté et/ou un moyen d'authentification nécessaire au fonctionnement du véhicule automobile (3) a été éloigné d'une position prévue dans le véhicule automobile (3) ou désactivé et/ou après qu'une fin d'un trajet du véhicule automobile (3) a été reconnue au moyen de critères prescrits par l'unité de commande (7).
